# EUROPÄISCHE PATENTSCHRIFT

(11) **EP 0 810 144 B1**
(45) Veröffentlichungstag und Bekanntmachung des Hinweises auf die Patenterteilung: **08.03.2000**
(21) Anmeldenummer: 97105938.1
(22) Anmeldetag: 10.04.1997
(51) Int. Cl.: B62D 25/08

(54) **Vorderbau eines Kraftfahrzeuges**
Front structure for automotive vehicles
Structure avant pour véhicules automobiles

(30) Priorität: 30.05.1996 DE 19621673
(43) Veröffentlichungstag der Anmeldung: 03.12.1997
(73) Patentinhaber: Bayerische Motoren Werke Aktiengesellschaft, 80788 München (DE)
(72) Erfinder: Stamm, Horst, 85435 Erding (DE); Kahle, Andreas, 80636 München (DE)

(56) Entgegenhaltungen:
- DE-A- 4 138 395
- FR-A- 2 392 863
- US-A- 2 851 302
- US-A- 3 188 132

## Beschreibung

Die Erfindung betrifft einen Vorderbau eines Kraftfahrzeuges gemäß dem Oberbegriff des Anspruchs 1.

Aus der EP-B 0 561 804 ist bereits eine Federbeinaufnahme einer Fahrzeugkarosserie bekannt, bei der an einem Längsträger ein schräg nach oben zur Federbeinaufnahme verlaufender Abstützträger angeordnet ist. Durch den Abstützträger kann ein Teil der bei einem Frontalaufprall auftretenden Kräfte über die Federbeinaufnahme abgeleitet werden. Die Federbeinaufnahme, die beispielsweise als ein Lagerbock ausgebildet sein kann, ist direkt an einem Querträger und Längsträger der Karosserie befestigt. Für den Fall, daß es sich bei dem Querträger um den Querträger der Fahrzeugstirnwand handelt, ist die Federbeinaufnahme in der A-Säule oder Vorderwandsäule integriert. Problematisch kann die Weiterleitung der auftretenden Crashkräfte sowie der Betriebskräfte von der Federbeinaufnahme zur Fahrzeugzelle sein, wenn die Federbeinaufnahme von der Stirnwand beabstandet ist.

Aufgabe der Erfindung ist es, einen Vorderbau eines Kraftfahrzeuges zu schaffen, der eine besonders steife Anbindung an die Fahrzeugzelle besitzt.

Gelöst wird diese Aufgabe bei einem gattungsgemäßen Vorderbau eines Kraftfahrzeuges durch die Merkmale des kennzeichnenden Teils des Anspruchs 1.

Durch die erfindungsgemäße Anbindung des Vorderbaus an die Fahrzeugzelle können die Reaktionskräfte an den Aufnahmepunkten des Fahrwerks und der Antriebseinheit ohne große Verwindungen der Gesamtstruktur aufgebracht werden, was zu einer deutlichen Verbesserung der Fahrdynamik und der niederfrequenten Akustik führt. Desweiteren ist bei einem Frontalzusammenstoß eine gleichmäßige Verteilung der auftretenden Kräfte gegeben.

Durch die erfindungsgemäße Anbindung der Federbeinaufnahme über zwei divergierende Träger, wobei der eine Träger der Federbeinaufnahme in Richtung zur A-Säule und der andere Träger in Richtung zur Stirnwand, insbesondere zu einem Querträger der Stirnwand, verläuft, erfolgt eine Aufteilung der im Fahrbetrieb in das Federbein und bei einem Frontaufprall durch die Abstützung des Längsträgers eingeleiteten Kräfte. Der zur Stirnwand verlaufende Träger ist so ausgebildet und angeordnet, daß er die eingeleiteten Kräfte über einen Stirnwandquerträger in die daran angeklebte Frontscheibe als Schubfeld weiterleitet und ein Eindrehen oder Abknicken des zur A-Säule verlaufenden Trägers verhindert. Der zur A-Säule führende Träger ist knapp unterhalb der Brüstungslinie an der Innenseite der A-Säule über deren ganze Länge angebunden, so daß die Belastung als Schubkraft in diese Fläche eingeleitet werden kann.

In einer vorteilhaften Ausführungsform übernimmt der Längsträger bei einem Frontalaufprall des Kraftfahrzeuges ca. 60 % der auftretenden Crashkraft mit einer Abweichung von jeweils 10 % nach oben oder nach unten, während die Abstützung zwischen dem Längsträger und der Federbeinaufnahme die restliche Kraft aufnimmt. Bei den karosserieseitigen oberen Trägern der Federbeinaufnahme übernimmt der zur A-Säule verlaufende Träger den überwiegenden Anteil der Kräfte in einer Größenordnung von ca. 75 % mit einer Abweichung von ca. 10 % nach oben oder nach unten, während der zur Stirnwand verlaufende Träger die verbleibende Kraft zur Stirnwand bzw. zu einem Stirnwand-Querträger weiterleitet.

Der erfindungsgemäße Vorderbau ist besonders vorteilhaft bei einem frontangetriebenen Fahrzeug einsetzbar, da durch eine Verteilung der Kräfte über die schräg nach oben verlaufende Abstützung und die mit der Federbeinaufnahme verbundenen Träger eine mögliche Schwächung des Längsträgers durch Freischnitte für die Antriebswelle sowie für den Radeinschlag aufgehoben wird.

Eine Ausführungsform der Erfindung wird nachstehend anhand der Zeichnung beispielshalber beschrieben. Dabei zeigen:
- Figur 1: eine perspektivische Ansicht einer Prinzipdarstellung eines Vorderbaus eines Kraftfahrzeuges,
- Figur 2: eine Seitenansicht des Vorderbaus der Figur 1 und
- Figur 3: eine Ansicht von oben auf die linke Hälfte des Vorderbaus der Figur 1.

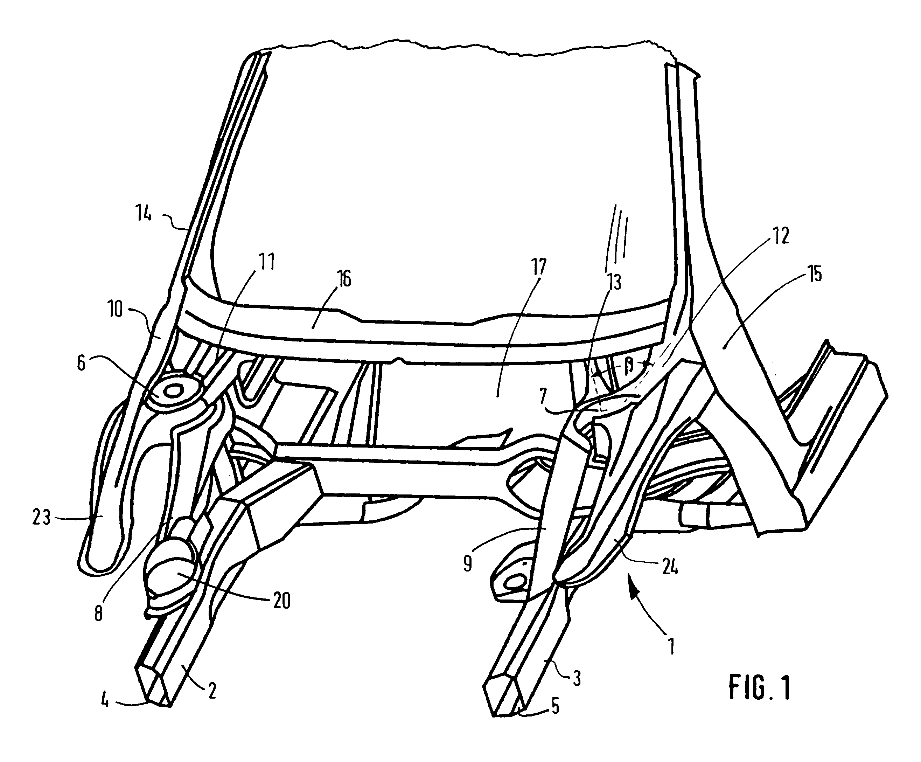

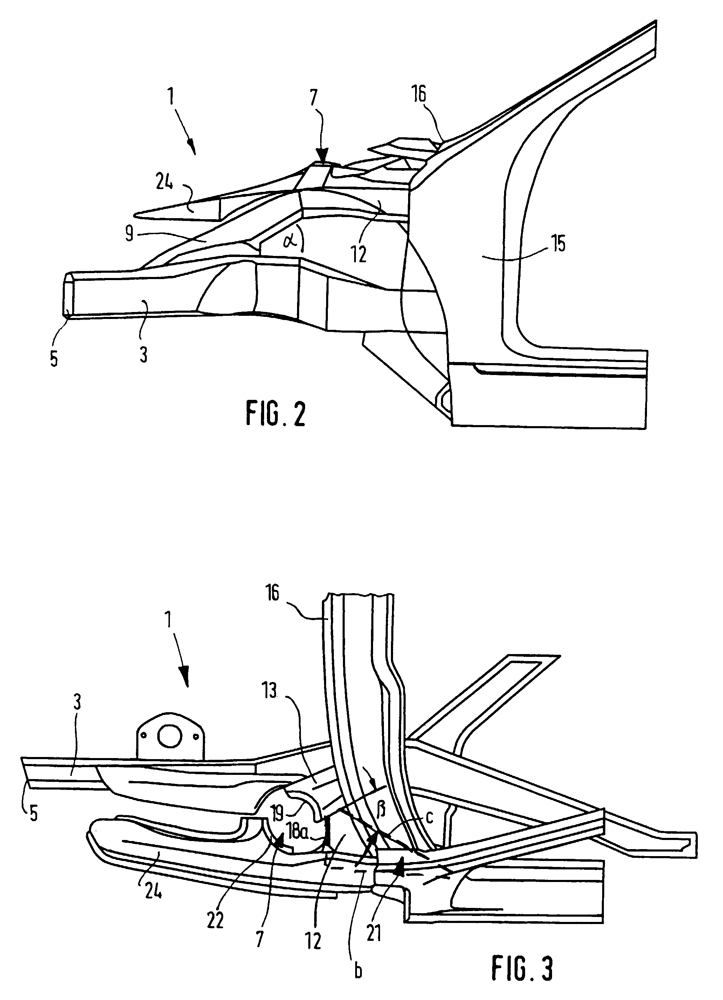

In der Figur 1 ist ein Vorderbau 1 eines Kraftfahrzeuges dargestellt, bei dem zwei Längsträger 2 und 3 im wesentlichen parallel zueinander verlaufen. Beabstandet zu den jeweiligen vorderen Enden 4 und 5 der Längsträger 2, 3 sind jeweils ein schräg zu einer Federbeinaufnahme 6 und 7 verlaufender Abstützträger 8 und 9 befestigt. In der Figur 2 ist ein Winkel α zwischen dem jeweiligen Längsträger 2, 3 und dem dazugehörigen Abstützträger 8, 9 eingezeichnet, der in der vertikalen Ebene liegt und zwischen 30 ° und 45 ° groß ist.

Der Abstützträger 8, 9 umfaßt die Federbeinaufnahme 6, 7 und teilt sich hinter dieser in jeweils zwei Träger 10, 11 und 12, 13 auf, die mit einer entsprechenden A-Säule 14, 15 bzw. einem Querträger 16 einer Stirnwand 17 verbunden sind. Der Querträger 16 ist in einer Ausführungsform zumindest an der Anbindungsstelle verstärkt. Der Querträger 16 der Stirnwand 17 erstreckt sich zur besseren Kraftübertragung in seiner gesamten Länge zwischen den beiden A-Säulen 14 und 15. Ferner hat es sich als günstig erwiesen, wenn auch die zur A-Säule hin verlaufenden Träger 10 und 12 mit dem Knoten 21 des Querträgers 16 an der jeweiligen A-Säule 14, 15 verbunden sind. Die beiden Träger 10, 11 bzw. 12, 13 der jeweiligen Federbeinaufnahme 6, 7 verlaufen im wesentlichen horizontal. In der horizontalen Ebene erstreckt sich ein Winkel β zwischen den Trägern 10, 11 bzw. 12, 13 in einem Bereich von ca. 30 ° bis 60 °, wie dies aus den Figuren 1 und 3 ersichtlich ist.

In einer Ausführungsform sind die Träger 10, 11 bzw. 12, 13 Blechteile, die zumindest an ihrem zur Federbeinaufnahme 6, 7 hinzeigenden Ende 18, 19 miteinander verbunden und/oder verschachtelt sind. Diese miteinander verbundenen Enden 18, 19 bilden einen Rand 22 zur Befestigung des Federbeintopfes. Dieser Rand 22 wird zusätzlich durch den jeweiligen der Federbeinaufnahme 6, 7 zugewandten Abschnitt eines vorderen Seitenwandträgers 23, 24 sowie des jeweiligen Abstützträgers 8, 9 gebildet und/oder versträrkt. Die miteinander verbundenen Enden und Abschnitte dienen somit gleichzeitig als lokale Versteifung.

In der in den Figuren gezeigten Ausführungsform verlaufen die Längsträger 2, 3 und die Federbeinaufnahmen 6, 7 seitlich versetzt nach innen zu den A-Säulen 14, 15. Die äußeren Träger 10, 12 weisen in der Draufsicht der Figur 3 im wesentlichen die Form eines spitzen Dreiecks auf, wobei der kurze Schenkel a des Dreiecks die Anbindung des Trägers 10, 12 an der Federbeinaufnahme 6, 7 ist, der mittellange Schenkel b die Anbindung des Trägers 10, 12 an der A-Säule und der lange Schenkel c die Anbindung an die Stirnwand 16, 17 darstellt. Der Träger 10, 12 ist vorzugsweise an der A-Säule 14, 15 über deren gesamte Länge angebunden, wie dies strichliert in der Figur 3 dargestellt ist. In dem Bereich, in dem sich der lange Schenkel c mit dem kurzen Schenkel a des Dreiecks trifft, ist vorzugsweise das vordere Ende 19 des inneren Trägers 11, 13 befestigt. Aus Steifigkeitsgründen und um die Knickgefahr bei einem Crash herunterzusetzen, sind sämtliche Träger weitgehend geradlinig ausgebildet.

In einer weiteren Ausführung wird die nicht dargestellte Antriebseinheit des Fahrzeugs in bzw. am Knoten 20 des Abstützträgers 8, 9 mit dem Längsträger 2, 3 gelagert, da dieser durch seine hohe lokale Steifigkeit sehr gute Voraussetzungen für eine akustische Entkoppelung bietet.

## Patentansprüche

1. Vorderbau eines Kraftfahrzeuges, insbesondere eines frontangetriebenen Kraftfahrzeuges, mit mindestens einem Längsträger pro Fahrzeugseite, an dem ein schräg nach oben zu einer Federbeinaufnahme (6, 7) verlaufender Abstützträger (8, 9) angeordnet ist, dadurch gekennzeichnet ist, daß die Federbeinaufnahme (6, 7) zu einer Stirnwand (17) und einer A-Säule (14, 15) einer Karosserie des Kraftfahrzeuges beabstandet angeordnet ist, daß die Federbeinaufnahme (6, 7) über zwei divergierende Träger (10, 11; 12, 13) mit der A-Säule (14, 15) und der Stirnwand (16, 17) verbunden ist und daß der zur Stirnwand (16, 17) verlaufende Träger (11, 13) so ausgebildet und angeordnet ist, daß er zusätzlich zur Aufnahme von Betriebskräften im Falle eines Frontaufpralles ein Eindrehen oder Abknicken des zur A-Säule (14, 15) verlaufenden Trägers (10, 12) verhindert.

2. Vorderbau nach Anspruch 1, dadurch gekennzeichnet, daß der Längsträger (2, 3), der Abstützträger (8, 9) und die zur A-Säule (14, 15) und zur Stirnwand (16, 17) verlaufenden Träger (10, 11; 12, 13) so ausgebildet und angeordnet sind, daß von den Kräften bei einem Frontalaufprall der Längsträger (2, 3) 50 bis 70 %, der Abstützträger (8, 9) entsprechend 50 bis 30 % und der zur A-Säule (14, 15) verlaufende Träger (10, 12) zwischen 60 und 80 % der ankommenden Kraft an die Reststruktur weiterleitet und daß der zur Stirnwand (16, 17) verlaufende Träger (11, 13) die verbleibende Kraft zu einem Stirnwand-Querträger (16) führt.

3. Vorderbau nach den Ansprüchen 1 oder 2, dadurch gekennzeichnet, daß die Abstützträger (8, 9), die Träger zur Stirnwand (10, 11; 12, 13) sowie die vorderen Seitenwandträger (23, 24) so ausgebildet sind, daß sie mit dem eingesetzten Federbeintopf eine lokale Verstärkung bilden.

4. Vorderbau nach einem der Ansprüche 1 bis 3, dadurch gekennzeichnet, daß der Träger (10, 12) über die gesamte Länge zwischen der Stirnwand (17) und einem Ausschnitt für eine Tür an der A-Säule (14, 15) angebunden ist.

5. Vorderbau nach einem der vorstehenden Ansprüchen, dadurch gekennzeichnet, daß die Lagerung einer Antriebseinheit an der Karosserie in bzw. an den jeweiligen Knoten des Abstützträgers (8, 9) mit dem dazugehörigen Längsträger (2, 3) erfolgt.

## Claims

1. A front structure forming part of a motor vehicle, especially a front-drive vehicle, comprising at least one longitudinal bearer on each side of the vehicle, on which a bracing bearer (8, 9) is disposed and extends obliquely upwards towards a spring leg holder (6, 7), characterised in that the spring leg holder (6, 7) is disposed at a distance from a front wall (17) and an A-column (14, 15) of a vehicle body, that the spring-leg holder (6, 7) is connected via two divergent bearers (10, 11; 12, 13) to the A-column (14, 15) and the front wall (16, 17), and that the bearer (11, 13) extending to the front wall (16, 17) is so designed and disposed that in addition to receiving operating forces in the event of a frontal collision it prevents the bearer (10, 12) extending to the A-column (14, 15) from being dented or buckling.

2. A front structure according to claim 1, characterised in that the longitudinal bearer (2, 3), the bracing bearer (8, 9) and the bearers (10, 11; 12, 13) extending to the A-column (14, 15) and to the front wall (16, 17) are so designed and disposed that in the event of a front collision, 50 to 70% of the forces are transmitted to the remaining structure by the longitudinal bearer (2, 3), 50 to 30% correspondingly by the bracing bearer (8, 9) and between 60 and 80% by the bearer (10, 12) leading to the A-column (14, 15) and that the bearer (11, 13) extending to the front wall (16, 17) transmits the remaining force to a front-wall transverse bearer (16).

3. A front structure according to claim 1 or claim 2, characterised in that the support bearer (8, 9), the bearers leading to the front wall (10, 11; 12, 13) and the front side-wall bearers (23, 24) are so designed that they form a local reinforcement in co-operation with the inserted spring-leg casing.

4. A front structure according to any of claims 1 to 3, characterised in that the bearer (10, 12) is joined to the A-column (14, 15) along the entire length between the front wall (17) and an opening for a door.

5. A front structure according to any of the preceding claims, characterised in that a drive unit is mounted on the body in or on the respective junction between the bracing bearer (8, 9) and the associated longitudinal bearer (2, 3).

## Revendications

1. Structure avant d'un véhicule à moteur, en particulier d'un véhicule à traction avant, avec au moins un support longitudinal par côté du véhicule sur lequel est disposé un support d'appui (8, 9) s'étendant obliquement vers le haut en direction d'un élément de réception (6, 7) d'une jambe de force à ressort,
caractérisée en ce que
- l'élément de réception (6, 7) de jambe de force à ressort est disposé à une certaine distance d'une paroi frontale (17) et d'une colonne A (14, 15) de la carrosserie du véhicule à moteur,
- l'élément de réception (6, 7) de jambe de force à ressort est relié au moyen de deux supports divergents (10, 11 ; 12, 13) à la colonne A (14, 15) et à la paroi frontale (16, 17), et
- le support (11, 13) qui s'étend vers la paroi frontale (16, 17) est constitué et disposé de telle sorte qu'il empêche en plus le support (10, 12) qui s'étend en direction de la colonne A (14, 15) de tourner ou de plier en plus de la réception des forces de fonctionnement dans le cas d'une collision frontale.

2. Structure avant selon la revendication 1,
caractérisée en ce que
- le support longitudinal (2, 3), le support d'appui (8, 9) et les supports (10, 11 ; 12, 13) qui s'étendent en direction de la paroi frontale (16, 17) sont constitués et sont disposés de telle sorte que 50 % à 70 des forces est retransmis au reste de la structure dans le cas d'une collision frontale des supports longitudinaux (2, 3), 50 à 30 % dans le cas d'une collision frontale des supports d'appui (8, 9) et entre 60 et 80 % dans le cas d'une collision frontale des supports (10, 12) qui s'étendent en direction de la colonne A (14, 15) des forces qui se produisent et
- le support (11, 13), qui s'étend en direction de la paroi frontale (16, 17) dirige la force résiduelle sur un support transversal (16) de la paroi frontale.

3. Structure avant selon la revendication 1 ou 2,
caractérisée en ce que
les supports d'appui (8, 9), les supports en direction de la paroi frontale (10, 11 ; 12, 13) ainsi que les supports antérieurs des parois latérales (23, 24) sont constitués de telle sorte qu'ils forment un renforcement local avec la tête mise en place de la jambe de force à ressort.

4. Structure avant selon la revendication 1 ou 3,
caractérisée en ce que
le support (10, 12) est relié sur toute la longueur entre la paroi frontale (17) et une section pour une portière à la colonne A (14, 15).

5. Structure avant selon l'une des revendications précédentes,
caractérisée en ce que
le montage d'une unité d'entraînement sur la carrosserie a lieu dans ou sur des noeuds du support d'appui (8, 9) avec le support longitudinal (2, 3) qui en fait partie.
